# EUROPÄISCHE PATENTSCHRIFT

(11) **EP 3 679 436 B1**
(45) Veröffentlichungstag und Bekanntmachung des Hinweises auf die Patenterteilung: **07.08.2024**
(21) Anmeldenummer: 18793572.1
(22) Anmeldetag: 10.10.2018
(51) Int. Cl.: G05B 19/418, G05B 19/4099, B22F 3/105, B29C 64/386, B33Y 10/00, B33Y 50/00

(54) **ANALYSE VON PULVERBETTVERFAHREN**
ANALYSIS OF POWDER BED PROCESSES
ANALYSE DE PROCÉDÉS SUR LIT DE POUDRE

(30) Priorität: 08.11.2017 DE 102017219860
(43) Veröffentlichungstag der Anmeldung: 15.07.2020
(73) Patentinhaber: Siemens Mobility GmbH, 81739 München (DE)
(72) Erfinder: KUNKEL, Maximilian, 91074 Herzogenaurach (DE)
(74) Vertreter: Siemens Patent Attorneys
(86) Internationale Anmeldenummer: PCT/EP2018/077541
(87) Internationale Veröffentlichungsnummer: WO 2019/091684

(56) Entgegenhaltungen:
- SIGMA LABS: "Process Control and Quality Assurance Software for Additive Manufacturing", INTERNET, 30 August 2016 (2016-08-30), AWS Lasers Conference 2016, XP055546337, Retrieved from the Internet <URL:https://docplayer.net/40384987-Process-control-and-quality-assurance-software-for-additive-manufacturing.html> [retrieved on 20190123]
- MARK COLA ET AL.: "3D Advanced Manufacturing in Aerospace & Defense In-Process Computer Aided Inspection for a Digital Eco-system", INTERNET, 9 March 2017 (2017-03-09), pages 1 - 16, XP055546436, Retrieved from the Internet <URL:https://sigmalabsinc.com/wp-content/uploads/2018/09/3D-advanced-manufacturing-aerospace-defence.pdf> [retrieved on 20190123]
- THOMAS SPEARS ET AL.: "In-process sensing in selective laser melting (SLM) additive manufacturing", INTEGRATING MATERIALS AND MANUFACTURING INNOVATION, BIOMED CENTRAL LTD, LONDON, UK, vol. 5, no. 1, 11 February 2016 (2016-02-11), pages 1 - 25, XP021251656, ISSN: 2193-9764, DOI: 10.1186/S40192-016-0045-4
- THOMAS TOEPPEL ET AL.: "3D ANALYSIS IN LASER BEAM MELTING BASED ON REAL-TIME PROCESS MONITORING", INTERNET, 31 December 2016 (2016-12-31), XP055546445, Retrieved from the Internet <URL:https://www.concept-laser.de/fileadmin/user_upload/PDFs/Meltpool3D-Fraunhofer-Studie.pdf> [retrieved on 20190123]

## Beschreibung

Die Erfindung betrifft ein Verfahren und eine Vorrichtung zur Analyse und/oder Überwachung von generativen Fertigungsverfahren, insbesondere von laserbasierten Verfahren, insbesondere von Pulverbettverfahren, wobei Messwerte zu wenigstens einer Prozessemission erfasst werden.

Generative Fertigungsverfahren - oder Additive Manufacturing - können auf verschiedene Arten und Weisen eingeteilt werden.

So nutzen laserbasierte additive Fertigungsverfahren oder laseradditive Fertigungsverfahren einen Laser als selektiv wirkendes Werkzeug. Sogenannte pulverbettbasierte 3D Druckverfahren, auch Pulverbettverfahren (Powder Bed Fusion Processes, kurz PBF-Verfahren), insbesondere Laserstrahlschmelz- und Lasersinterprozesse, sind dem Fachmann der generativen Fertigung ebenfalls hinlänglich bekannt. Es werden Pulverschichten definiert abgelegt und anschließend, insbesondere mittels elektromagnetischer Strahlung, z.B. einem Laser, thermisch gesintert oder verschmolzen. Nach dem Druckprozess werden die Bauteile von Pulver befreit. Neben laserbasierten Pulverbettverfahren können auch beim sogenannten Elektrodenstrahlschmelzen (englisch Electron Beam Melting) Prozessemissionen entstehen und erfasst werden.

Insbesondere zur Prozessbewertung von laserbasierten Verfahren und/oder Pulverbettverfahren (PBF-Prozessen), insbesondere von Laserstrahlschmelzprozessen, sind Systeme bekannt, welche die Möglichkeit bieten, unterschiedliche Messwerte (z.B. Schutzgasverlauf, Baukammertemperatur, Laserleistung) aufzunehmen. Die Datenanalyse und Bewertung obliegt jedoch dem Anwender. Dabei ist eine Vielzahl von möglichen Einflussfaktoren zu bewerten.

Speziell mit Bezug auf Schmelzbadüberwachungssysteme (Meltpool-Monitoring Systeme) kann das Prozessleuchten auf verschiedenen Wegen (On-Axis / Off Axis) mit unterschiedlichsten Messgeräten (Pyrometer, Bolometer, Thermografiekamera, Fotodioden, Hochgeschwindigkeitskameras (CCD / CMOS)) aufgenommen werden. Für die Datenauswertung sind hingegen bisher keine geeigneten, aussagekräftigen Analyseverfahren bzw. Algorithmen bekannt, die direkt auf die Prozessqualität und somit auf die zu erwartenden Bauteileigenschaften schließen lassen. Der aktuelle Stand der Technik beschränkt sich zumeist auf einfache Ausgaben der erfassten Mittelwerte und Varianzen oder der einfachen Ausgabe von erzeugten Schichtbildern (Meltpoolmaps). Diese sollen dann vom Anwender durch "Vergleich" bewertet werden.

"Process Control and Quality Assurance Software for Additive Manufacturing" von Sigma Labs, AWS Lasers Conference, 30. August 2016 offenbart die Überwachung von Prozessemissionen mittels Fotodioden (S. 20: "On-Axis Photo Diode" und "Off-Axis Photo Diode") und eine Auswertung ihrer Signale in Relation zu einem vorgegebenen Nennwert.

Der Erfindung liegt die Aufgabe zugrunde, ein Verfahren zur Beurteilung von Bauteileigenschaften anhand von gemessenen Prozesswerten vorzuschlagen.

Gelöst wird die Aufgabe durch die Gegenstände der unabhängigen Patentansprüche. Weiterbildungen und Ausgestaltungen der Erfindung finden sich in den Merkmalen der abhängigen Patentansprüche wieder.

Ein erfindungsgemäßes Verfahren zur Analyse und/oder Überwachung eines generativen Fertigungsverfahrens, insbesondere eines laserbasierten Fertigungsverfahrens, insbesondere eines Laserstrahlschmelzprozesses, bei der, beispielsweise schichtweisen, Fertigung eines Werkstücks bzw. zur Analyse und/oder Überwachung eines, insbesondere mit einem Pulverbettverfahren schichtweise hergestellten Werkstücks, umfasst die Verfahrensschritte nach Anspruch 1.

Prozessemissionen treten insbesondere in Form einer Strahlung, insbesondere einer elektromagnetischen Wellen-Strahlung auf und werden in einem vorgegebenen Band, insbesondere in einem vorgegebenen elektromagnetischen Wellenspektrum, erfasst. Eine Form einer Prozessemission ist das sogenannte Prozessleuchten. Es tritt beispielsweise beim Laserstrahlschmelzen durch teilionisiertes, verdampftes Pulver auf, welcher Dampf dem Schmelzbad entströmt und ein breitbandiges Leuchten, meist im Nah-Infrarotbereich, emittiert. Das Prozessleuchten kann als eine Art Signatur zum Schmelzprozess angesehen werden, da jeder Werkstoff anders emittiert.

Eine erfindungsgemäße Vorrichtung zur Analyse eines generativen Fertigungsverfahrens und zur Analyse eines mit dem generativen Fertigungsverfahren, insbesondere schichtweise, hergestellten Werkstücks umfasst entsprechend wenigstens einen geeignet ausgebildeten Messwertaufnehmer zur Erfassung von Messwerten zu wenigstens einer das Prozessleuchten repräsentierenden Messgröße als Messwerte zu wenigstens einer Prozessemission bei der Fertigung des Werkstücks.

Gemäß einer weiteren Weiterbildung werden Reflexionswerte des Schmelzbads als Messwerte erfasst, insbesondere mit einer Fotodiode und/oder mit einer Hochgeschwindigkeitskamera. Eine weitergebildete Vorrichtung weist entsprechend wenigstens eine Fotodiode und/oder eine Hochgeschwindigkeitskamera auf.

Vorteilhaft können Messwerte zu mehreren Messgrößen erfasst und gemäß dem beschriebenen Verfahren ausgewertet werden.

Ein geeignetes Überwachungssystem umfasst beispielsweise ein Pyrometer, Bolometer, eine Thermografiekamera, eine Fotodiode und/oder eine Hochgeschwindigkeitskamera (CCD / CMOS) zur Erfassung von das Prozessleuchten repräsentierenden Reflexionswerten des Schmelzbads. Diese können pro Schicht schmelzbadpositionsbezogen abgespeichert werden, um anschließend mittels der geeigneten Recheneinheit ausgewertet werden zu können.

Dabei werden jeweils mehrere Messwerte zu mehreren vorgegebenen Volumenelementen des Werkstücks erfasst. Die einzelnen Volumenelemente des Werkstücks müssen dabei nicht gleich groß sein und entsprechend müssen nicht gleich viele Messwerte für jedes Volumenelement erfasst und ausgewertet werden. Deren Anzahl pro Volumenelement soll hingegen, wie oben bereits ausgeführt, für die nachfolgende statistische Auswertung groß genug sein. Auch die Anzahl an Volumenelementen pro Werkstück zur Analyse des generativen Fertigungsverfahrens und/oder des Werkstücks wird entsprechend vorgegeben.

Gemäß einer Weiterbildung der Erfindung ist das Werkstück schichtweise gefertigt, beispielsweise mit einem Pulverbettverfahren. Ein Volumenelement des Werkstücks kann genau einer Schicht des schichtweise gefertigten Werkstücks entsprechen. Bei unterschiedlichen Schichtgrößen, insbesondere durch unterschiedlich große Flächen der einzelnen Schichten, sind die einzelnen, vorgegebenen Volumenelemente des Werkstücks dann unterschiedlich groß bzw. umfassen unterschiedliche viele Messwerte. Grundsätzlich könnten jedoch beliebige Punkte, Linien oder Flächen einer Schicht des schichtweise gefertigten Werkstücks als Volumenelemente vorgegeben werden, da eine Schicht immer eine minimale Schichtdicke- und breite aufweist, die insbesondere von einer Pulvergröße des verwendeten Ausgangswerkstoffs abhängig ist, weisen selbst beliebige Punkte oder Linien ein Volumen auf. Die Messwerte liegen in einer Schicht und lassen sich somit zweidimensional darstellen, repräsentieren jedoch Volumenelemente mit vorgegebenen Schichtdicken. Somit sind mehrere Volumenelemente pro Schicht denkbar. Gemäß einer weiteren Weiterbildung der Erfindung begrenzt jedes vorgegebene Volumenelement jeweils eine vorgegebene Fläche genau einer Schicht des schichtweise gefertigten Werkstücks. Es sind also nicht mehrere Schichten, sondern nur eine Schicht pro Volumenelement umfasst.

Des Weiteren können zumindest die Volumenelemente einer Schicht gleich groß vorgegeben werden. Durch unterschiedliche Schichtgrößen können dann verschiedene Anzahlen an Volumenelementen pro Schicht erhalten werden. Alternativ könnte die gleiche Anzahl an Volumenelementen pro Schicht vorgegeben werden, dann aber gegebenenfalls mit voneinander verschiedenen Größen.

Aus den Messwerten zu den Prozessemissionen zu jedem vorgegebenen Volumenelement werden jeweils ein Mittelwert und eine Standardabweichung errechnet. Es liegen somit Mittelwerte und Standardabweichungen für jedes Volumenelement, beispielsweise jede gefertigte Schicht, vor.

Die erfindungsgemäße Vorrichtung zur Analyse eines generativen Fertigungsverfahrens und zur Analyse eines mit dem generativen Fertigungsverfahren, insbesondere schichtweise, hergestellten Werkstücks umfasst daher weiterhin wenigstens eine entsprechend geeignet ausgebildete Recheneinheit zur Bildung von Mittelwerten und Standardabweichungen aus den Messwerten zu den einzelnen, vorgegebenen Volumenelementen des Werkstücks.

Anschließend wird die Verteilung der Standardabweichungen über eine Anzahl vorgegebener Volumenelemente, insbesondere über das gesamte Werkstück und somit sämtliche Volumenelemente und deren entsprechende Standardabweichungen umfassend, als Maß für die Prozessqualität überprüft. Weitergebildet wird überprüft, ob die Verteilung der Standardabweichungen eine Normalverteilung ist. Die Recheneinheit einer entsprechend weitergebildeten Vorrichtung zur Analyse eines generativen Fertigungsverfahrens und zur Analyse eines mit dem generativen Fertigungsverfahren ist entsprechend geeignet ausgebildet.

Gemäß einer weiteren Weiterbildung wird bei Vorliegen einer Normalverteilung der errechneten Standardabweichungen mehrerer vorgegebener Volumenelemente auf einen fehlerfreien Prozess geschlossen. Die Verteilung der Standardabweichungen stellt ein Maß für die Prozessqualität dar. Bei einer Abweichung der errechneten Standardabweichungen mehrerer vorgegebener Volumenelemente von einer Normalverteilung wird entsprechend auf einen Fehler im generativen Fertigungsverfahren bei der Herstellung des Werkstücks geschlossen.

Eine weitere Weiterbildung des erfindungsgemäßen Verfahrens sieht vor, dass zweidimensionale Verteilungen der errechneten Standartabweichungen und der errechneten Mittelwerte überprüft werden, ob diese normalverteilt sind, um auf die Prozessqualität zu schließen. Es werden also zunächst Tupel aus Mittelwerten und Standardabweichungen zu den jeweiligen Volumenelementen gebildet und diese in einem zweidimensionalen Koordinatensystem für eine vorgegebene Anzahl an Volumenelementen aufgetragen, insbesondere für sämtliche Volumenelemente des gefertigten Werkstücks. Durch Form der Punktewolke wird anschließend geschlossen, ob ein fehlerfreier Herstellungsprozess vorlag.

Weitergebildet wird durch Form und Lage der Punktewolke auf die Prozessqualität geschlossen.

Eine erfindungsgemäße Vorrichtung zur Analyse eines generativen Fertigungsverfahrens, insbesondere eines Pulverbettverfahrens, und zur Analyse eines mit dem generativen Fertigungsverfahren, insbesondere mit dem Pulverbettverfahren, insbesondere schichtweise hergestellten Werkstücks umfasst eine Recheneinheit wie in Anspruch 8 definiert. Das erfindungsgemäße Verfahrens zur Analyse und/oder Überwachung eines generativen Fertigungsverfahrens, insbesondere eines laserbasierten Pulverbettverfahrens, insbesondere eines Laserstrahlschmelzprozesses, bei der schichtweisen Fertigung eines Werkstücks bzw. zur Analyse und/oder Überwachung eines mit einem generativen Fertigungsverfahren, insbesondere eines laserbasierten Pulverbettverfahrens, schichtweise hergestellten Werkstücks, umfasst die in Anspruch 1 genannten Verfahrensschritte.

Variationskoeffizienten werden gebildet als Quotienten aus den Mittelwerten und den entsprechenden Standardabweichungen. Als inverse Variationskoeffizienten werden deren Kehrwerte bezeichnet, also Quotienten aus Standardabweichungen und Mittelwerten, welche hier ebenfalls als mit umfasst gelten sollen.

Der gleitende Mittelwert der Variationskoeffizienten oder der inversen Variationskoeffizienten über ein Fenster vorgegebener Volumenelemente dient zum Überprüfen der Verteilung der Standardabweichungen der vorgegebenen Volumenelemente. Der gleitende Mittelwert der Variationskoeffizienten gilt also als Maß für die Verteilung der Standardabweichungen. Liegt er innerhalb eines vorgegebenen Intervalls, so kann angenommen werden, dass die Verteilung der Standardabweichungen eine Normalverteilung ist.

Bilden die Volumenelemente jeweils eine Schicht des schichtweise gefertigten Werkstücks ab, so lauten die Verfahrensschritte dem Erfassen der Messwerte zu wenigstens einer Prozessemission bei der Fertigung des Werkstücks folgend:
- Errechnen von Mittelwerten und Standardabweichungen aus den Messwerten zu einzelnen Schichten des Werkstücks,
- Bilden von Variationskoeffizienten für die jeweiligen Schichten,
- Bilden eines gleitenden Mittelwerts von den Variationskoeffizienten über ein Fenster vorgegebener Schichten, und
- Überprüfen, ob der gleitende Mittelwert innerhalb eines vorgegebenen Intervalls liegt.

Das typische Prozessleuchten des Schmelzbads bei bekannten Pulverbettverfahren, beispielsweise beim Laserstrahlschmelzen, wird mit einem geeigneten Überwachungssystem, insbesondere geeignete Messwertaufnehmer umfassend, erfasst und anschließend mittels wenigstens einer geeigneten Recheneinheit ausgewertet. Zunächst werden für jedes untersuchte Volumenelement, insbesondere für jede untersuchte Schicht, bzw. jeden das Volumenelement respektive die Schicht bildenden Prozessschritt des Pulverbettverfahrens wenigstens ein Mittelwert und eine Standardabweichung über ein vorgegebenes Fenster, beispielsweise über einen ausgewählten Bereich, also über ein vorgegebenes Volumenelement oder über die gesamte Schicht gebildet. Anschließend werden für wenigstens ein Volumenelement, insbesondere jedoch für mehrere, beispielsweise für jede Schicht die Variationskoeffizienten oder die inversen Variationskoeffizienten gebildet. Über eine vorgegebene Anzahl an Volumenelementen, insbesondere unmittelbar benachbarte Volumenelemente und somit prozesstechnisch aufeinanderfolgend gefertigte Volumenelemente werden gleitende Mittelwerte der Variationskoeffizienten oder der inversen Variationskoeffizienten errechnet. Weicht der gleitende Mittelwert ab, überschreitet er also ein vorgegebenes Intervall, welches ebenfalls gleitend angepasst werden kann, so wird ein Fehler erkannt. Das vorgegebene Intervall kann also einen entsprechenden Vertrauensbereich angeben. Somit könnte das vorgegebene Intervall auch Konfidenzintervall genannt werden. Es können auch mehrere, voneinander verschiedene Intervalle vorgegeben werden. So wird dann überprüft, ob der gleitende Mittelwert innerhalb zumindest eines der vorgegebenen Intervalle liegt.

Erfindungsgemäß wird bei Überschreiten des vorgegebenen Intervalls um den Variationskoeffizienten oder den inversen Variationskoeffizienten darauf geschlossen, dass ein Fehler vorgelegen hat, beispielsweise, dass das Schmelzbad unruhig war und/oder dass das Werkstück fehlerhaft ist. Daraufhin kann auch ein Fehlersignal erzeugt und ausgegeben werden.

Das Intervall selbst kann über mehrere oder sämtliche Volumenelemente gleitend sein. Die vorgegebenen Fenster umfassen eine vorgegebene Anzahl an gleitenden Mittelwerten von Variationskoeffizienten und repräsentieren somit eine vorgegebene Anzahl an Volumenelementen. Für jedes Fenster kann somit ein Intervall vorgegeben werden, welches sich von Intervallen anderer Fenster unterscheidet. Beispielsweise bei ansteigendem Kurvenverlauf, also bei zunehmenden gleitenden Mittelwerten, können die Grenzen der Intervalle ebenfalls ansteigend vorgegeben werden. Diese können über mehrere Schichten und somit über das gesamte Werkstück variieren. Theoretisch ist auch eine Anpassung der Intervallgrenzen über eine Schicht denkbar, abhängig von der Anzahl und Größe der vorgegebenen Fenster.

Erfindungsgemäß wird das Intervall in Abhängigkeit der gleitenden Mittelwerte über das vorgegebene Fenster vorgegeben. Dabei können die Intervallgrenzen als Funktion der gleitenden Mittelwerte über das vorgegebene Fenster vorgegeben werden, beispielsweise weisen diese den gleichen Abstand um einen Durchschnitt der Mittelwerte über das vorgegebene Fenster vorgegebener Volumenelemente auf.

Eine weitere Weiterbildung ist darin zu sehen, dass die Varianz der gleitenden Mittelwerte auch und insbesondere innerhalb des vorgegebenen Intervalls über das vorgegebene Fenster als Maß für die Prozessqualität überprüft wird. Zunächst wird die Varianz oder die Standardabweichung der gleitenden Mittelwerte über das vorgegebene Fenster errechnet und anschließend untersucht. Bei kleiner Varianz kann auf einen fehlerfreien Prozess geschlossen werden.

Gemäß einer weiteren Weiterbildung kann der Verlauf der gleitenden Mittelwerte auch und insbesondere innerhalb des vorgegebenen Intervalls über das vorgegebene Fenster als Maß für die Prozessqualität überprüft werden.

Die Erfindung schlägt somit eine standardisierte und zielgerichtete Vorgehensweise zur Datenanalytik und deren Bewertung vor.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
Fig. 1 zeigt exemplarisch einen Kurvenlauf von mittels einer Fotodiode erfassten und gemittelten Intensitäten und deren Varianzen über einzelne Schichten eines Bauteils, welches in späteren Versuchen als fehlerfrei bewertet wurde,
Fig. 2 zeigt exemplarisch einen Kurvenlauf von mittels einer Hochgeschwindigkeitskamera erfassten und gemittelten Reflexionswerten und deren Varianzen über einzelne Schichten eines Bauteils, welches in späteren Versuchen als fehlerfrei bewertet wurde,
Fig. 3 zeigt exemplarisch einen Kurvenlauf von mittels einer Fotodiode erfassten und gemittelten Intensitäten und deren Varianzen über einzelne Schichten eines Bauteils, welches in späteren Versuchen als fehlerhaft bewertet wurde,
Fig. 4 zeigt exemplarisch einen Kurvenlauf von mittels einer Hochgeschwindigkeitskamera erfassten und gemittelten Reflexionswerten und deren Varianzen über einzelne Schichten eines Bauteils, welches in späteren Versuchen als fehlerhaft bewertet wurde,
Fig. 5 zeigt exemplarisch ein Datenblatt mit den aus den erfassten Messwerten abgeleiteten Mittelwerten und Varianzen zu einzelnen Schichten des gefertigten Bauteils für verschiedene Belichtungsschritte,
Fig. 6 zeigt ein Diagramm mit Werten zu Flächen- und Konturbelichtung,
Fig. 7 zeigt den inversen Variationskoeffizienten zu den Messwerten zur Konturbelichtung sowie einen gleitenden Mittelwert, aufgetragen über vorgegebene Schichten,
Fig. 8 zeigt ein Diagramm aus unverarbeiteten Daten mehrerer Bauteile,
Fig. 9 zeigt eine statistische Auswertung der, mittels zerstörender Prüfung von Bauteilen, aufgenommenen Materialkennwerte.

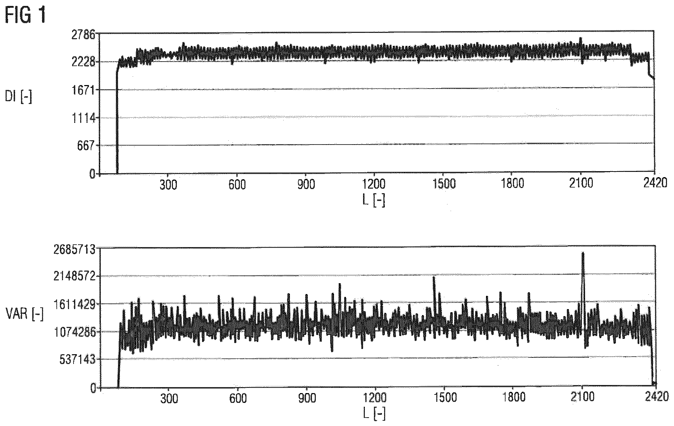

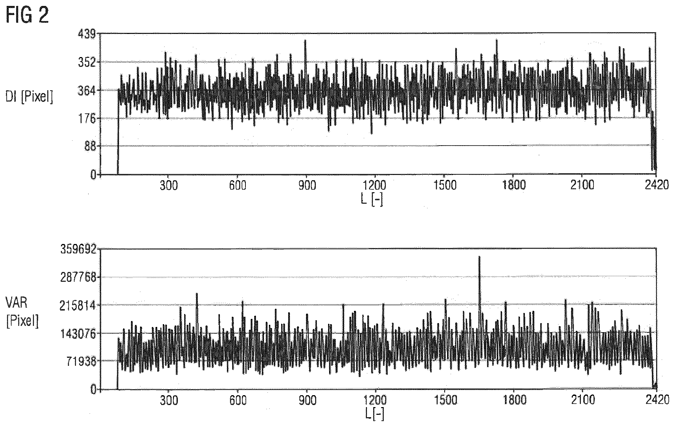

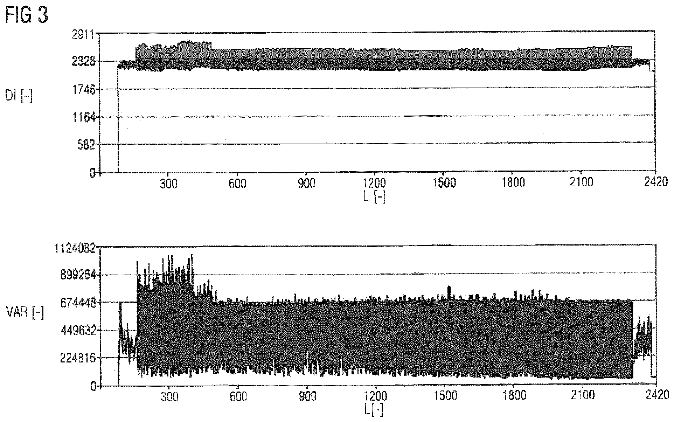

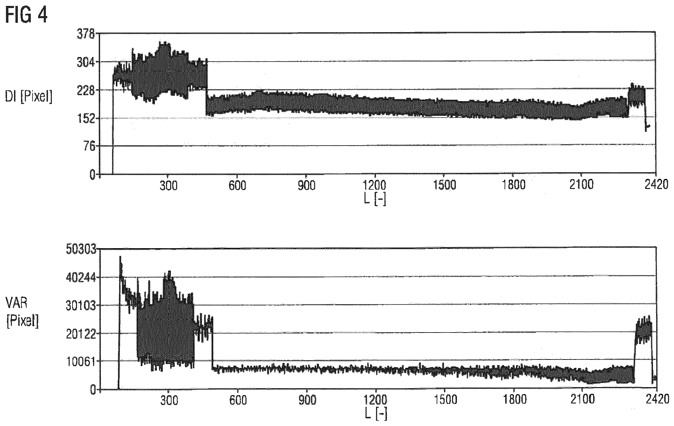

In den Figuren 1 bis 4 sind als aus dem Stand der Technik bekannte Ausgaben von gemessenen Reflexionswerten dargestellt. Die Reflexionswerte repräsentieren das Prozessleuchten. Die Messwerte der Figuren 1 bis 4 stammen aus einem Schmelzbadüberwachungssystem namens "QM-Meltpool 2D" von "Concept Laser" von General Electric (GE). Sie zeigen beispielhaft Fertigungs-Prozesswerte von Bauteilen, welche anschließend wenigstens einer Werkstoffprüfung, insbesondere statistischer zerstörender Prüfungen, unterzogen wurden und als "gut" oder fehlerfrei bzw. als "schlecht" oder fehlerhaft befunden wurden. Die Bewertung der Bauteile anhand der Figuren 1 bis 4 als solcher ist zunächst nicht möglich.

Das Überwachungssystem nimmt Reflexionswerte des Schmelzbads, hier mittels Fotodiode und Hochgeschwindigkeitskamera, im Prozess auf und speichert diese schmelzbadpositionsbezogen ab. Hierauf aufbauend werden 2 Datenausgaben für den Anwender offeriert:
1) PDF- Ausgabe (siehe Fig. 1 bis Fig. 4) (auch 2D-Meltpoolgenannt) der Mittelwerte und der Varianzen der Schmelzbadfläche einer Schicht, über alle Schichten sowie Ausgabe der Mittelwerte der Diodenintensität und deren Varianz pro Schicht, über alle Schichten. Die oberen Kurven der Fig. 1 bis Fig. 4 bilden dabei die genannten Mittelwerte der über die Schicht gemittelten Intensitäten oder Reflexionswerte ab, während die jeweils unteren Kurven deren Varianzen darstellen. Diese Daten können auch in einer Datendatei, hier als .csv-Datei von der Anlage exportiert werden. Grundsätzlich sind auch andere geeignete Dateiformate denkbar.

Auf Basis der exportierten Dateien können dann eigene Analysen durchgeführt werden. Eine standardisierte Vorgehensweise zur Datenanalyse ist derzeit nicht benannt. Es wird darauf verwiesen, dass die Daten gut geeignet seien, um im Falle einer Serienproduktion, also beim Wiederholen desselben Herstellungsprozesses, die Kurvenverläufe vergleichend zu bewerten. Sind diese ähnlich, so kann davon ausgegangen werden, dass es keine Probleme gab. Jedoch sind keine Akzeptanz und Verwurfs-Charakteristika bekannt.

2) Meltpool-Mapping, auch 3D Meltpool genannt: Die jeweiligen Reflexionswerte (Kamer / Diodensignal), die in einer Schicht gemessen werden, werden pro Schicht positionsbezogen gespeichert. Anschließend werden aus den Schicht-Karten, mittels Bildstapelverarbeitung, voxelbasierte 3D-Modelle erzeugt. Nicht dargestellt ist die Möglichkeit, ein aus erfassten Messwerten erzeugtes 3D-Modell eines schichtweise gefertigten Bauteils zu bearbeiten, indem gewisse Graustufen gefiltert werden, anhand der der Anwender eine eigene Qualitätsbewertung vornehmen kann. Auch hier gibt es keine standardisierten Annahmen oder Verwurfskriterien. Darüber hinaus hat die Bildstapelverarbeitung deutliche Schwächen was Auflösung (in Z-Richtung), Zeiteinsatz und persönliche Fähigkeiten des jeweiligen Anwenders betrifft.

Eine Fehlerindikation hängt von der Wahl der Opazitätskurven ab. Diese wird von dem jeweiligen Bediener definiert und ist somit kein zuverlässiger Indikator für einen Fehler im Bauteil. Die Qualitätsbewertung mittels Bildstapelverarbeiteter Meltpoolmaps (Stand der Technik)ist keinesfalls standardisiert. Ein zusätzliches Problem hierbei ist die schlechte Auflösung in Z-Richtung:
Die Indikation von Fehlstellen ist abhängig von gesetzten Opazitätsgrenzwerten des Bedieners. Eine Detektion von Fehlstellen muss über mehrere Schichtaufnahmen erfolgen, z.B. wenn in einer Schicht eine Auffälligkeit erkannt wurde (entsprechend der eigenen Opazitätseinstellung), so muss vergleichend in der darunter und darüber liegenden Schicht geschaut werden, ob hier ebenfalls an gleicher Stelle eine entsprechende Fehlerindikation vorliegt. Nur sofern Fehlerindikationen sich über mehrere Schichten erstrecken, ist ein Fehler zu vermuten. Dies könnte aber auch an den gewählten Opazitätsgrenzwerten liegen (kein Fehler nur falsches Setting).

Es bestanden somit zum Zeitpunkt dieser Anmeldung Lösungsansätze aber keine Lösungen für das Problem der PBF-Qualitätsbewertung.

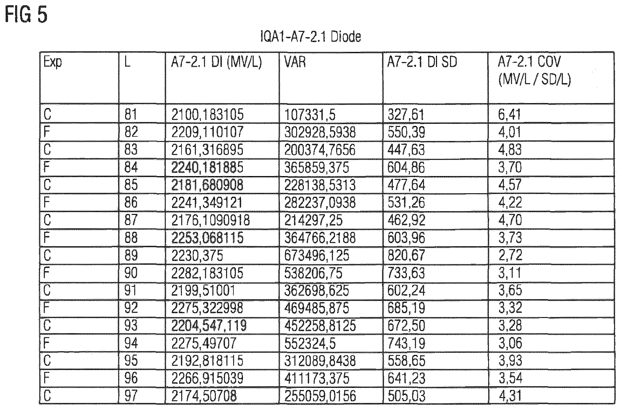

Der Erfindung liegt nun ein gemäß Fig. 5 bis Fig. 9 veranschaulichtes Verfahren zugrunde, dass auf Basis der zu wenigstens einer das Prozessleuchten repräsentierenden Messgrö-ße erfassten Messwerte eine analytische Qualitätsbeurteilung des Prozessverlaufs ermöglicht. Für die Fig. 5 bis Fig. 9 wurde exemplarisch das Diodensignal verwendet.

Das Verfahren gliedert sich gemäß diesem Ausführungsbeispiel in folgende Verfahrensschritte:
1. Export der oben beschriebenen Daten betreffend die über alle Schichten ermittelten Mittelwerte der Diodenintensität (zusätzlich oder alternativ auch die Schmelzbadfläche bei Hochgeschwindigkeitskamera) und deren Varianzen pro Schicht in eine geeignete Recheneinheit zu deren Auswertung. Fig. 5 zeigt beispielhaft einen Ausschnitt aus einer solchen Datentabelle. In Spalte 1 ist der Belichtungsschritt (Exp) aufgeführt, in Spalte 2 die Nummer der Schicht, Spalte 3 listet die Mittelwerte der Diodenintensität (DI) für die jeweilige Schicht auf, während Spalte 4 deren Varianz ausgibt.

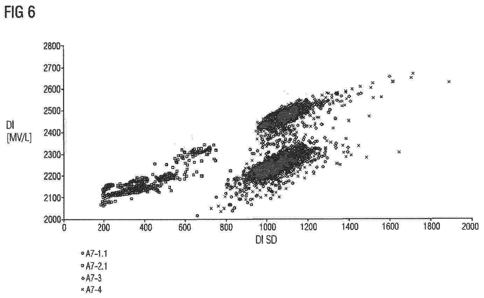

Die Daten sind, falls geboten, nach Belichtungsschritt zu separieren, also in die Rubriken Flächen- und Konturbelichtung (F) und (reine) Konturbelichtung (C) getrennt voneinander zu bewerten um die Streubreite zu minimieren. Hieraus entstehen für die jeweiligen Belichtungsschrittgruppen normalverteilte Grundgesamtheiten gemäß Fig. 6.

Beim sogenannten Hülle-/Kern-Verfahren wird der Laser bei der Fertigung herkömmlicherweise in einer ersten Schicht mit weniger Leistung betrieben um nur den Rand der Schicht aufzuschmelzen. In einer darauffolgenden, zweiten Schicht wird er hingegen mit mehr Leistung betrieben um die erste und die zweite Schicht auch in der Fläche aufzuschmelzen. Daher erscheint es sinnvoll die Daten nach Belichtungsschritt, also in die reine Konturbelichtung und die Kontur- und Flächenbelichtung zu trennen und aufzuarbeiten. Dies erfolgt insbesondere unabhängig von Aufnahmeverfahren (Diode oder Kamera). Der gleitende Mittelwert von den Variationskoeffizienten kann somit separiert nach Belichtungsschritt gebildet werden.

Fig. 6 zeigt nun ein Punktdiagramm in dem die Tupel aus Mittelwert und Standardabweichung (hier beispielsweise an den Diodensignalen) über alle Schichten abgebildet sind. Es zeigt sich, dass die Tupel von guten Bauteilen einer Normalverteilung folgen während die Tupel von Schlechtbauteilen deutlich (unnormal) streuen. Die verschiedenen Regionen sind auf die Belichtungsschritte zurückzuführen (reine Konturbelichtung oder Kontur- und Flächenbelichtung im jeweiligen Belichtungsschritt).

2. Bildung der Standardabweichung durch Quadratwurzelziehen aus der jeweiligen Flächenvarianz (Siehe Fig. 5, fünfte Spalte von links, bezeichnet mit DI SD).

3. Bildung des (gegebenenfalls inversen) Variationskoeffizienten (Schichtquotienten) "Diode": Mittlere Diodenintensität der Schicht (MV/L) / Diodenintensitäts-Standardabweichung der Schicht (SD/L) oder umgekehrt; siehe Fig. 5, sechste Spalte von links. Gleichermaßen könnte auch ein Schichtquotienten "Kamera" (Mittlere Schmelzbadfläche der Schicht / Standardabweichung der Schmelzbadfläche der Schicht oder umgekehrt) gebildet werden.

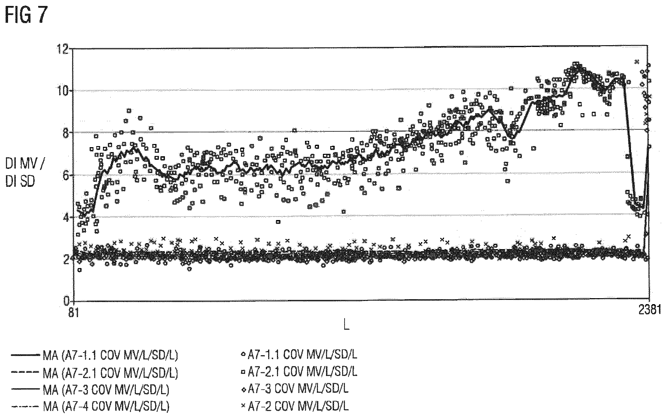

4. Bilden eines gleitenden Durchschnitts durch die einzelnen, zur Überprüfung herangezogenen (gegebenenfalls inversen) Variationskoeffizienten (Schichtquotienten). Deren Anzahl bestimmt die Länge des Fensters und ist in Abhängigkeit des Werkstücks beliebig zu wählen. Fig. 7 zeigt exemplarisch den Plot der inversen Variationskoeffizienten (Mittelwert/Standardabweichung) für Diode und/oder Kamera über ein Fenster vorgegebener Schichten (Punktewolken der Fig. 7), sowie den gleitenden Durchschnitt (MA COV) als durchgezogene Linien in den Punktewolken.

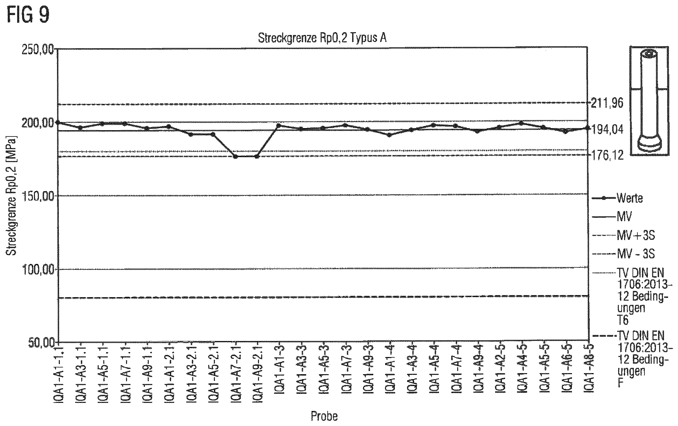

5. Ist der gleitende Durchschnitt näherungsweise konstant oder in einem schmalen Intervall wie bei den unteren Kurven der Fig. 7, so läuft der Prozess stabil. Weicht der gleitende Durchschnitt ab, ist der Kurvenverlauf also beispielsweise steigend, fallend, zackig etc., wie die obere Kurve der Fig. 7, so liegt ein Problem mit dem Prozess vor. Das Schmelzbad ist unruhig. Mechanische Eigenschaften der Bauteile werden dann in Mitleidenschaft gezogen; siehe auch Figuren 9, in welchen die betroffenen Bauteile deutliche Abweichungen in den mechanischen Eigenschaften zeigen (Kennwerte liegen 3σ entfernt vom Mittelwert).

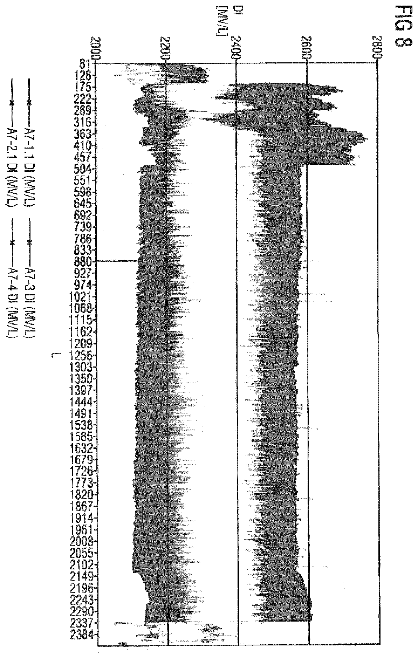

Fig. 8 zeigt zum Vergleich die Darstellung der Mittelwerte der Diodenintensitäten über die Schichten, die sich aus der reinen, unverarbeiteten Übernahme der CSV-Daten ergibt. Das Diagramm aus unverarbeiteten Daten mehrerer Bauteile verdeutlicht, dass die Qualitätsbewertung auf Basis eines einfachen Vergleichs der aufgenommenen Signale keine eindeutige Auskunft über die Prozessqualität gibt und eine Qualitätsindikation bei dem vorhandenen Rauschen nicht möglich ist. Die dunkle, einen hellen Bereich einschließende Kurve repräsentiert einen fehlerhaften Prozess.

Fig. 9 zeigt, wie oben bereits angedeutet, eine statistische Auswertung der, mittels zerstörender Prüfung von Bauteilen, aufgenommenen Materialkennwerte. Anhand dieser kann der Zusammenhang des Prozesssignals mit den resultierenden Bauteileigenschaften belegt werden. Die Ausreißer, sind jene, die auch im Rahmen der Signalanalyse stark variierende (gegebenenfalls inverse) Variationskoeffizienten zeigen. Hier reissen zwei Proben aus - ihre mechanischen Eigenschaften sind korreliert zum Signalverlauf.

Ein Vorteil der Erfindung besteht in einer numerisch basierten, quantifizierbaren Bewertung des Prozessverlaufs. Der Algorithmus ist einfach und effizient. Seine Funktionalität konnte anhand von Versuchsreihen empirisch bewiesen werden. Aufwendige Aufarbeitungsalgorithmen und Bildanalysen können hierdurch umgangen werden. Der Algorithmus erlaubt eine direkte Qualitätsprognose. Ebenfalls könnte sich dieser aufgrund seiner Einfachheit auch für eine Online-Prozessüberwachung, eine sogenannte Closed-Loop-Regelung, eignen. Weiterhin können hierdurch Prozesscharakteristika schnell und effizient eingeschätzt und somit eine adäquate Qualitätskontrolle durchgeführt werden. Fehler im optischen System einer PBF-Anlage lassen sich umgehend und ohne Fokusvermessung oder Laserleistungsmessung usw. identifizieren.

Eine erfindungsgemäße Vorrichtung zur Analyse eines generativen Fertigungsverfahrens, insbesondere eines Pulverbettverfahrens, und zur Analyse eines mit dem generativen Fertigungsverfahren, insbesondere schichtweise, insbesondere mit einem Pulverbettverfahren schichtweise hergestellten Werkstücks, umfasst wenigstens einen Messwertaufnehmer zur Erfassung von Messwerten zu wenigstens einer Prozessemission bei der Fertigung des Werkstücks, insbesondere zur Erfassung von Messwerten zu wenigstens einer das Prozessleuchten repräsentierenden Messgröße und wenigstens eine Recheneinheit, die geeignet ausgebildet ist zur Bildung von Mittelwerten und Standardabweichungen aus den Messwerten zu vorgegebenen Volumenelementen des Werkstücks, insbesondere auch zur Bildung von Variationskoeffizienten für die jeweiligen Volumenelemente und zur Bildung eines gleitenden Mittelwerts von den Variationskoeffizienten über ein Fenster vorgegebener Volumenelemente, und zur Überprüfung einer Verteilung der errechneten Standardabweichungen mehrerer vorgegebener Volumenelemente als Maß für die Prozessqualität, insbesondere zur Überprüfung der Lage des gleitenden Mittelwerts innerhalb eines vorgegebenen Intervalls.

Mittelwerte und Standardabweichungen zu den Messwerten vorgegebener Volumenelemente werden errechnet und überprüft, ob die errechneten Standardabweichungen zu mehreren, insbesondere den gesamten zu überprüfenden Teil des Bauteils betreffenden, vorgegebenen Volumenelementen normalverteilt sind. Die Verteilung der Standardabweichungen ist dabei ein Maß für die Prozessqualität ist.

Durch die Dreidimensionalität der gefertigten Schichten wird von Volumenelementen gesprochen. Ein- oder zweidimensionale Punkt- oder Linienelemente können nicht erfasst werden. Flächen der einzelnen Schichten entsprechen Schnitten durch das Werkstück (Schnittebenen). Die Dicken der Schichten sind dabei oft im Wesentlichen konstant. Unterschiedlich große Schichten entstehen durch unterschiedlich große Flächen, weniger durch unterschiedliche Schichtdicken. Die Messwerte zu den Volumenelementen bilden die zweidimensionale Fläche ab, repräsentieren aber ein Volumenelement mit vorgegebener Schichtdicke.

Die von den Messwertaufnehmern erfassten Prozessemissionen, wie beispielsweise das Prozessleuchten, entstehen in einem meist begrenzten Bands, bei SRM z.B. im Nahinfrarot-Bereich. Die Messwertaufnehmer sind daher geeignet zur Erfassung von Messwerten eines vorgegebenen Spektrums.

## Patentansprüche

1. Verfahren zur Analyse eines generativen Fertigungsverfahrens, wobei Messwerte zu wenigstens einer Prozessemission bei der Fertigung eines Werkstücks erfasst werden, wobei Mittelwerte und Standardabweichungen der Messwerte vorgegebener Volumenelemente des Werkstücks errechnet werden, wobei als Messwerte zu der wenigstens einen Prozessemission bei der Fertigung des Werkstücks Messwerte zu wenigstens einer ein Prozessleuchten repräsentierenden Messgröße erfasst werden und wobei eine Verteilung der errechneten Standardabweichungen mehrerer vorgegebener Volumenelemente als Maß für die Prozessqualität überprüft wird, **dadurch gekennzeichnet, dass** aus den errechneten Mittelwerten und Standardabweichungen Variationskoeffizienten gebildet werden, ein gleitender Mittelwert von den Variationskoeffizienten über ein Fenster vorgegebener Volumenelemente gebildet wird und überprüft wird, ob der gleitende Mittelwert innerhalb eines vorgegebenen Intervalls liegt, bei Überschreiten des vorgegebenen Intervalls darauf geschlossen wird, dass ein Fehler vorgelegen hat, und das Intervall in Abhängigkeit der gleitenden Mittelwerte über das vorgegebene Fenster vorgegeben wird.

2. Verfahren nach Anspruch 1, **dadurch gekennzeichnet, dass** bei Vorliegen einer Normalverteilung der errechneten Standardabweichungen mehrerer vorgegebener Volumenelemente auf einen fehlerfreien Prozess geschlossen wird.

3. Verfahren nach einem der Ansprüche 1 oder 2, **dadurch gekennzeichnet, dass** zweidimensionale Verteilungen der errechneten Standartabweichungen und der errechneten Mittelwerte überprüft werden, ob diese normalverteilt sind, um auf die Prozessqualität zu schließen.

4. Verfahren nach Anspruch 1, **dadurch gekennzeichnet, dass** die Varianz der gleitenden Mittelwerte über das vorgegebene Fenster als Maß für die Prozessqualität überprüft wird.

5. Verfahren nach Anspruch 1, **dadurch gekennzeichnet, dass** der Verlauf der gleitenden Mittelwerte über das vorgegebene Fenster als Maß für die Prozessqualität überprüft wird.

6. Verfahren nach einem der Ansprüche 1 bis 5, **dadurch gekennzeichnet, dass** Messwerte zur Reflexionen des Schmelzbads erfasst werden.

7. Verfahren nach einem der Ansprüche 1 bis 6, **dadurch gekennzeichnet, dass** Messwerte zu mehreren Messgrößen erfasst und ausgewertet werden.

8. Vorrichtung zur Analyse eines generativen Fertigungsverfahrens und zur Analyse eines mit dem generativen Fertigungsverfahren hergestellten Werkstücks, umfassend wenigstens einen Messwertaufnehmer zur Erfassung von Messwerten zu wenigstens einer Prozessemission bei der Fertigung des Werkstücks und umfassend wenigstens eine Recheneinheit, geeignet ausgebildet zur Bildung von Mittelwerten und Standardabweichungen aus den Messwerten zu vorgegebenen Volumenelementen des Werkstücks, wobei der wenigstens eine Messwertaufnehmer geeignet ausgebildet ist zur Erfassung von Messwerten zu wenigstens einer das Prozessleuchten repräsentierenden Messgröße, **dadurch gekennzeichnet, dass** die wenigstens eine Recheneinheit geeignet ausgebildet ist zur Bildung von Variationskoeffizienten für die jeweiligen Volumenelemente, zur Bildung eines gleitenden Mittelwerts von den Variationskoeffizienten über ein Fenster vorgegebener Volumenelemente, zur Überprüfung der Lage des gleitenden Mittelwerts innerhalb eines vorgegebenen Intervalls, zum Schließen auf einen Fehler bei Überschreiten des vorgegebenen Intervalls, und zur Vorgabe des Intervalls in Abhängigkeit der gleitenden Mittelwerte über das vorgegebene Fenster.

9. Vorrichtung nach Anspruch 8, **dadurch gekennzeichnet, dass** die Recheneinheit geeignet ausgebildet ist zur Überprüfung einer Verteilung der errechneten Standardabweichungen mehrerer vorgegebener Volumenelemente als Maß für die Prozessqualität.

10. Vorrichtung nach einem der Ansprüche 8 oder 9, **dadurch gekennzeichnet, dass** sie wenigstens eine Fotodiode und/oder wenigstens eine Hochgeschwindigkeitskamera zur Erfassung von Messwerten zu der wenigstens einen Prozessemission bei der Fertigung des Werkstücks aufweist.

## Claims

1. Method for analysing an additive manufacturing process, which involves detecting measurement values concerning at least one process emission during the manufacture of a workpiece, wherein average values and standard deviations of the measurement values of predefined volume elements of the workpiece are calculated, wherein measurement values concerning at least one measurement variable representing process luminous emission are detected as measurement values concerning the at least one process emission during the manufacture of the workpiece, and wherein a distribution of the calculated standard deviations of a plurality of predefined volume elements is checked as a measure of the process quality, **characterized in that** from the calculated average values and standard deviations, variation coefficients are formed, a moving average value of the variation coefficients over a window of predefined volume elements is formed and a check is carried out as to whether the moving average value lies within a predefined interval, and if the predefined interval is exceeded, it is deduced that a fault was present, and the interval is predefined as a function of the moving average values over the predefined window.

2. Method according to Claim 1, **characterized in that** a faultfree process is deduced if a normal distribution of the calculated standard deviations of a plurality of predefined volume elements is present.

3. Method according to either of Claims 1 and 2, **characterized in that** two-dimensional distributions of the calculated standard deviations and of the calculated average values are checked as to whether they exhibit a normal distribution, in order to deduce the process quality.

4. Method according to Claim 1, **characterized in that** the variance of the moving average values over the predefined window is checked as a measure of the process quality.

5. Method according to Claim 1, **characterized in that** the profile of the moving average values over the predefined window is checked as a measure of the process quality.

6. Method according to any of Claims 1 to 5, **characterized in that** measurement values concerning reflections of the melt pool are detected.

7. Method according to any of Claims 1 to 6, **characterized in that** measurement values concerning a plurality of measurement variables are detected and evaluated.

8. Device for analysing an additive manufacturing process and for analysing a workpiece produced by the additive manufacturing process, comprising at least one measurement value pickup for detecting measurement values concerning at least one process emission during the manufacture of the workpiece, and comprising at least one computing unit, suitably configured for forming average values and standard deviations from the measurement values concerning predefined volume elements of the workpiece, wherein the at least one measurement value pickup is suitably configured for detecting measurement values concerning at least one measurement variable representing the process luminous emission, **characterized in that** the at least one computing unit is suitably configured for forming variation coefficients for the respective volume elements, for forming a moving average value of the variation coefficients over a window of predefined volume elements, for checking the position of the moving average value within a predefined interval, for deducing a fault if the predefined interval is exceeded, and for predefining the interval as a function of the moving average values over the predefined window.

9. Device according to Claim 8, **characterized in that** the computing unit is suitably configured for checking a distribution of the calculated standard deviations of a plurality of predefined volume elements as a measure of the process quality.

10. Device according to either of Claims 8 and 9, **characterized in that** it comprises at least one photodiode and/or at least one high-speed camera for detecting measurement values concerning the at least one process emission during the manufacture of the workpiece.

## Revendications

1. Procédé d'analyse d'un procédé de fabrication génératif, dans lequel on détecte des valeurs de mesure se rapportant à au moins une émission de processus lors de la fabrication d'une pièce, dans lequel on calcule des valeurs moyennes et des écart-types des valeurs moyennes d'éléments de volume donnés à l'avance de la pièce, dans lequel on détecte, comme valeurs de mesure se rapportant à la au moins une émission de processus lors de la fabrication de la pièce, des valeurs de mesure se rapportant à au moins une grandeur de mesure représentant une luminescence de processus et dans lequel on contrôle une répartition des écart-types calculés de plusieurs éléments de volume donnés à l'avance comme mesure de la qualité du processus,
**caractérisé en ce qu'**
à partir des valeurs moyennes et des écart-types calculés, on forme des coefficients de variation, on forme une valeur moyenne mobile des coefficients de variation par une fenêtre d'éléments de volume donnés à l'avance et on contrôle, si la valeur moyenne mobile se trouve dans un intervalle donné à l'avance, si l'intervalle donné à l'avance est dépassé, on en déduit qu'il y a un défaut, et on prescrit l'intervalle en fonction des valeurs moyennes mobiles sur la fenêtre donnée à l'avance.

2. Procédé suivant la revendication 1, **caractérisé en ce que**, en présence d'une répartition normale des écart-types calculés de plusieurs éléments de volume donnés à l'avance, on conclue à un processus sans défaut.

3. Procédé suivant l'une des revendications 1 ou 2, **caractérisé en ce que** l'on contrôle des répartitions en deux dimensions des écart-types calculés et des valeurs moyennes calculées, sur le point savoir si ceux-ci sont répartis normalement pour décider de la qualité du processus.

4. Procédé suivant la revendication 1, **caractérisé en ce que** l'on contrôle la variance des valeurs moyennes mobiles sur la fenêtre donnée à l'avance comme mesure de la qualité du processus.

5. Procédé suivant la revendication 1, **caractérisé en ce que** l'on contrôle la courbe des valeurs moyennes mobiles sur la fenêtre donnée à l'avance comme mesure de la qualité du processus.

6. Procédé suivant l'une des revendications 1 à 5, **caractérisé en ce que** l'on détecte des valeurs de mesure se rapportant à des réflexions du bain de fusion.

7. Procédé suivant l'une des revendications 1 à 6, **caractérisé en ce que** l'on détecte et on évalue des valeurs de mesure se rapportant à plusieurs grandeurs de mesure.

8. Dispositif d'analyse d'un procédé de fabrication génératif et d'analyse d'une pièce fabriquée par un procédé de fabrication génératif, comprenant au moins un enregistreur de valeurs de mesure pour la détection de valeurs de mesure se rapportant à au moins une émission de processus lors de la fabrication de la pièce et comprenant au moins une unité informatique, qui est constituée de manière appropriée à la formation de valeurs moyennes et d'écart-types, à partir des valeurs de mesure se rapportant à des éléments de volume donnés à l'avance de la pièce,
dans lequel le au moins un enregistreur de valeurs de mesure est constitué de manière appropriée à la détection de valeurs de mesure se rapportant à au moins une grandeur de mesure représentant la luminescence du processus,
**caractérisé en ce que** la au moins une unité informatique est constituée de manière appropriée à la formation de coefficients de variation des éléments de volume respectifs pour la formation de valeurs moyennes mobiles des coefficients de variation sur une fenêtre d'éléments de volume donnés à l'avance, pour le contrôle de la position de la valeur moyenne mobile dans un intervalle donné à l'avance, pour décider d'un défaut, si l'intervalle donné à l'avance est dépassé, et pour la prescription de l'intervalle en fonction des valeurs moyennes mobiles sur la fenêtre donnée à l'avance.

9. Procédé suivant la revendication 8, **caractérisé en ce que** l'unité informatique est constituée de manière appropriée pour le contrôle d'une répartition des écart-types calculés de plusieurs éléments de volume donnés à l'avance comme mesure de la qualité du processus.

10. Procédé suivant l'une des revendications 8 ou 9, **caractérisé en ce qu'**il comporte au moins une photodiode et/ou au moins un appareil photographique à grande vitesse de détection de valeurs de mesure se rapportant à au moins une émission de processus lors de la fabrication de la pièce.
